# EUROPÄISCHE PATENTSCHRIFT

(11) **EP 2 750 993 B1**
(45) Veröffentlichungstag und Bekanntmachung des Hinweises auf die Patenterteilung: **24.06.2015**
(21) Anmeldenummer: 12744002.2
(22) Anmeldetag: 10.08.2012
(51) Int. Cl.: B65G 17/08

(54) **KETTENGLIED MIT DURCH GLEITABSCHNITT GETRENNTEN GELENK- UND GABELABSCHNITT**
CHAIN LINK COMPRISING AN ARTICULATION SECTION AND A FORK SECTION SEPARATED BY A SLIDE SECTION
MAILLON DE CHAÎNE COMPRENANT UNE SECTION ARTICULATION ET UNE SECTION FOURCHE SÉPARÉES PAR UNE SECTION DE COULISSEMENT

(30) Priorität: 03.09.2011 DE 102011112396
(43) Veröffentlichungstag der Anmeldung: 09.07.2014
(73) Patentinhaber: Robert Bosch GmbH, 70442 Stuttgart (DE)
(72) Erfinder: GUENER, Till, 70376 Stuttgart (DE); BAIER, Wolfram, 73760 Ostfildern (DE); LUDWIG, Peter, 72072 Tuebingen (DE); BUTTAU, Hans-Peter, 74348 Lauffen (DE)
(74) Vertreter: Maiß, Harald
(86) Internationale Anmeldenummer: PCT/EP2012/065636
(87) Internationale Veröffentlichungsnummer: WO 2013/029961

(56) Entgegenhaltungen:
- EP-A1- 0 083 119
- EP-A1- 0 323 819
- EP-A1- 0 820 942
- WO-A1-2007/121957

## Beschreibung

Kettenglied mit durch Gleitabschnitt getrennten Gelenk- und Gabelabschnitt Die Erfindung betrifft ein Kettenglied für eine kurvengängige Förderkette gemäß dem Oberbegriff von Anspruch 1.

Ein derartiges Kettenglied ist aus der EP 0 323 819 A1 bekannt.

10 Aus der DE 100 27 229 A1 ist ein Kettenglied für eine kurvengängige Förderkette bekannt. Gemäß den Fig. 1 und 2 umfasst das Kettenglied einen Grundkörper und einen (nicht dargestellten) Bolzen. Der vorliegend einstückige Grundkörper umfasst einen Gelenkabschnitt 10 und einen Gabelabschnitt 11. Auf der Oberseite des Grundkörpers ist ein Mitnahmemittel in Form einer ebenen Tragfläche 3 vorgesehen, mit dem (nicht dargestelltes) Fördergut reibschlüssig mitgenommen werden kann. Anstelle der ebenen Tragfläche sind auch andere Mitnahmemittel, beispielsweise senkrecht von der Tragfläche abstehende Mitnehmer, Lamellen oder Bürsten bekannt. In Verbindung mit den zuletzt genannten Mitnahmemitteln ist oft ein mehrteiliger Grundkörper vorgesehen.

Der Bolzen ist langgestreckt ausgebildet, wobei er über die gesamte Länge kreiszylindrisch ausgebildet ist. In dem Gelenkabschnitt ist ein Bolzendurchbruch 9 vorgesehen, der von dem Bolzen bezüglich zweier Achsen drehbeweglich durchsetzt wird. Der Bolzendurchbruch ist dabei analog zur Fig. 4 der EP 0 569 071 B2 gestaltet, d. h. der gesamte Bolzendurchbruch ist vollständig an dem Grundkörper vorgesehen, wobei er in der Mitte eine engste Querschnittsfläche aufweist, die sich zu den beiden Öffnungen hin erweitert, so dass der Bolzen die gewünschte Drehbeweglichkeit aufweist. Aus der EP 1 311 446 B1 ist eine alternative Gelenkkonstruktion bekannt, bei der der Bolzendurchbruch von einer kreiszylindrischen Ausnehmung gekreuzt wird, in welcher ein gesondertes Gelenkteil eingesetzt ist. Das Gelenkteil besitzt wiederum einen Durchbruch, der an den Bolzen angepasst ist. Die letztgenannte Gelenkbauform kann deutlich größere Kettenzugkräfte übertragen als die in der DE 100 27 229 A1 gezeigte.

An dem Gabelabschnitt der DE 100 27 229 A1 ist eine Gabelausnehmung 7 zur Aufnahme des Gelenkabschnitts eines benachbarten, identischen Kettenglieds vorgesehen. An dem Gabelabschnitt sind weiter zwei Bolzenausnehmungen in Form von kreiszylindrischen Bohrungen vorgesehen, welche zur Aufnahme des Bolzens des benachbarten Kettenglieds dienen. Weiter sind an dem Grundkörper aus Polyoxymethylen mehrere Gleitabschnitte 4 aus faserverstärktem Polytetraflurethylen (Handelsname "Teflon") vorgesehen. Mit den Gleitabschnitten sollen die Reibkräfte der Kettenglieder an den Kettenführungen herabgesetzt werden.

Der Nachteil des Kettenglieds gemäß der DE 100 27 229 A1 besteht darin, dass sowohl der Gelenkabschnitt als auch der Gabelabschnitt aus dem gleichen Material bestehen. Diese Materialien reiben beim Betrieb der Förderkette unmittelbar aneinander und erzeugen Quietschgeräusche. Dieses Problem tritt insbesondere bei dem für die Kettenglieder einer Förderkette bevorzugten Material Polyoxymethylen auf. Es ist jedoch allgemein zu beobachten, dass gleichartige Materialien, insbesondere Kunststoffmaterialien, die unter Last aneinander reiben, aufgrund des Stick-Slip-Effekts Quietschgeräusche erzeugen. Zur Lösung dieses Problems ist es bereits bekannt, Polyoxymethylen mit verschiedenen Zusätzen zu versehen, welche dessen Gleitfähigkeit verbessern. In der Folge sinkt die Neigung zur Geräuschbildung. Derartige Materialien sind aber sehr teuer.

Die Aufgabe der Erfindung besteht darin, die vorstehend beschriebene Geräuschbildung auf kostengünstige Weise zu mindern bzw. ganz zu vermeiden.

Erfindungsgemäß wird diese Aufgabe durch die Merkmale des kennzeichnenden Teils des Anspruchs 1 gelöst. Dabei sind zwei Gleitabschnitte gegenüberliegend an dem Gelenkabschnitt angeordnet, wobei sie den Bolzen umgeben, wobei die Grundkörper zweier benachbarter, identischer Kettenglieder durch die Gleitabschnitte so auf Abstand gehalten werden, dass sich deren Gelenk- und deren Gabelabschnitt nur an den Gleitabschnitten berühren.

Hierdurch ist ausgeschlossen, dass sich die identischen Materialien des Gelenk- und des Gabelabschnitts berühren, da diese durch die Gleitabschnitte auf Abstand gehalten werden. In der Folge sind Quietschgeräusche ausgeschlossen. Hinsichtlich der Mitnahmemittel wird ebenfalls angestrebt, dass diese sich nicht berühren. Insbesondere bei weit von dem Gelenk- bzw. Gabelabschnitt abstehenden Mitnahmemitteln, wie Mitnehmern, Lamellen oder Bürsten, kann jedoch eine Berührung zumindest bei Kurvenfahrt nicht vollständig ausgeschlossen werden. Eine derartige Berührung ist jedoch unschädlich, da solche Mitnahmemittel sehr elastisch sind und mithin die bei Berührung auftretenden Reibkräfte gering sind. Dementsprechend ist bei einer Berührung der Mitnahmemittel keine Geräuschbildung zu befürchten.

Hinsichtlich der räumlichen Ausdehnung der Abschnitte aus einem anderen Material als der Grundkörper ist anzumerken, dass diese selbstverständlich deutlich größer sein können als die Gleitabschnitte an sich. Insbesondere kann daran gedacht sein, dass der gesamte Gelenkabschnitt aus einem anderen Material als der Gabelabschnitt besteht. Unter dem Gleitabschnitt soll im Rahmen der vorliegenden Anmeldung der Bereich verstanden werden, in dem sich der Gelenk- und der Gabelabschnitt beim Betrieb der Förderkette gleitend berühren können.

Das Material des Grundkörpers und des Gleitabschnitts kann jeweils eines der Materialien Polyoxymethylen (POM), Polybutylenterephthalat (PBT), Polyamid (PA), Polypropylen (PP), Polyethylen (PE), Polybutylensuccinat (PBS), Polyvinylidenfluorid (PVDF), Polycarbonat (PC) oder Polyethylenterephthalat (PET) sein, wobei vorzugsweise der Grundkörper aus Polyoxymethylen und die Gleitabschnitte aus Polyamid bestehen. Die genannten Werkstoffe eigenen sich alle zum Kunststoffspritzgießen und bieten eine ausreichende Festigkeit und Verschleißbeständigkeit für den Einsatz in einem Förderkettenglied. Die genannten Materialien können mit Additiven und/oder einer Faserverstärkung versehen sein. Bevorzugt besteht der Grundkörper aus Polyoxymethylen. Dieser Werkstoff besitzt die notwendigen mechanischen Eigenschaften für ein Förderkettenglied und ist dabei kostengünstig. Darüber hinaus hat sich dieser Werkstoff seit langer Zeit für diesen Einsatzzweck bewährt. Versuche der Anmelderin haben ergeben, dass Polyamid besonders gut als Material für die Gleitabschnitte geeignet ist, wenn der Grundkörper aus Polyoxymethylen besteht.

Erfindungsgemäß weist der Gelenkabschnitt eine Lagerausnehmung mit einer kreiszylindrischen Innenumfangsfläche auf, welche den Bolzendurchbruch kreuzt, wobei ein Gelenkteil mit einem Lagerabschnitt vorgesehen ist, wobei der Lagerabschnitt eine kreiszylindrische Außenumfangsfläche aufweist und drehbar in der Lagerausnehmung aufgenommen ist, wobei der Lagerabschnitt einen kreiszylindrischen ersten Durchbruch aufweist, der quer zu dessen kreiszylindrischer Außenumfangsfläche verläuft, wobei die Gleitabschnitte einstückig an dem Gelenkteil ausgebildet sind. Das Gelenkteil kann insgesamt aus einem anderen Werkstoff hergestellt werden als der Grundkörper, so dass jedes Teil für sich kostengünstig hergestellt werden kann, vorzugsweise im Kunststoffspritzgussverfahren. Gleichzeitig kann das vorgeschlagene Kettenglied besonders hohe Kettenzugkräfte übertragen.

Die Gleitabschnitte können jeweils einen zweiten kreiszylindrischen Durchbruch aufweisen, der fluchtend zum ersten Durchbruch angeordnet ist. Der zweite Durchbruch dient zum Durchführen des Bolzens, damit dieser in den Gabelabschnitt des benachbarten Kettenglieds eingreifen kann. Darüber hinaus wird die Lage des Gleitabschnitts in dem Spalt zwischen Gelenk- und Gleitabschnitt durch den Bolzen zuverlässig formschlüssig festgelegt. Hierfür ist der zweite Durchbruch vorzugsweise mit geringem Spiel an den Bolzen angepasst.

Jedem Gleitabschnitt kann ein Verbindungsabschnitt zugeordnet sein, welcher den Gleitabschnitt mit dem Lagerabschnitt einstückig verbindet, wobei der Verbindungsabschnitt gleitend am Gelenkabschnitt des Grundkörpers anliegt oder mit geringem Abstand zu diesem angeordnet ist. Der Lagerabschnitt des Gelenkteils wird durch den Gelenkabschnitt nahezu über seine gesamte Erstreckung vom Gleitabschnitt getrennt. Durch einen Verbindungsabschnitt, der in unmittelbarer Nähe oder in gleitender Berührung mit dem Gelenkabschnitt angeordnet ist, ist es dennoch möglich, den Gleitabschnitt einstückig mit dem Lagerabschnitt zu verbinden. Hierbei ist anzumerken, dass der Lagerabschnitt wie oben vorgeschlagen bereits durch den Bolzen hinsichtlich der Lage gesichert sein kann. Durch den Verbindungsabschnitt wird daher in erster Linie sichergestellt, dass sich der Gleitabschnitt nicht bezüglich des Bolzens verdreht, so dass ein dünnwandiger Verbindungsabschnitt vollständig ausreichend ist.

Im Bereich einer Stirnfläche des Lagerabschnitts kann zwischen den Verbindungsabschnitten eine Ausnehmung mit einer konvex gebogenen Grundfläche vorgesehen sein, welche sich quer zum Bolzen über die gesamte Breite des Lagerabschnitts erstreckt. Durch die genannte Ausnehmung wird erreicht, dass der Eingriff eines Antriebszahnrades in den Gelenkabschnitt des Kettengliedes durch den Verbindungsabschnitt nicht gestört wird. Die Kraftübertragung zwischen dem Antriebszahnrad findet folglich nahezu ausschließlich zwischen dem Gelenkabschnitt und den Zähnen des Antriebszahnrades statt. Das Gelenkteil kann folglich durch die entsprechenden Antriebskräfte nicht beschädigt werden.

Der Gleitabschnitt kann auf der dem Lagerabschnitt zugewandten Seite eine zum Lagerabschnitt koaxiale, kreiszylindrische erste Fläche aufweisen, die an einer angepassten zweiten Fläche am Gelenkabschnitt anliegt. Damit liegt der Gleitabschnitt vollflächig auf dem Gelenkabschnitt auf, wobei gleichzeitig eine gewünschte Drehbeweglichkeit zwischen benachbarten Kettengliedern möglich ist. Zwischen der ersten und der zweiten Fläche finden dabei Gleitbewegungen statt. Der dadurch verursachte Verschleiß ist durch die vollflächige Auflage gering.

Der Gleitabschnitt kann auf der vom Lagerabschnitt abgewandten Seite eine ebene dritte Fläche aufweisen, wobei die gegenüberliegende vierte Fläche am Gabelabschnitt ebenfalls eben ausgebildet ist. Das Gleitteil kann und soll sich bezüglich des Gabelabschnitts des benachbarten Kettenglieds nur bezüglich der Mittelachse des Bolzens drehen. Durch die genannte ebene dritte und vierte Fläche wird diese Bewegung ermöglicht, wobei jede andere Bewegung ausgeschlossen ist. Die dritte und die vierte Fläche sind vorzugsweise senkrecht zur Mittelachse des kreiszylindrischen Abschnitts des Bolzens angeordnet. Der Abstand der ersten und der dritten Fläche bestimmt den Abstand zwischen dem Gelenk- und dem Gabelabschnitt zweier benachbarter Kettenglieder.

Am Gleitabschnitt kann angrenzend an die dritte Fläche eine Einführschräge angeordnet sein. Der Abstand der dritten Fläche am Gleitteil ist allenfalls geringfügig kleiner als der Abstand der vierten Fläche am Gabelabschnitt. Durch die vorgeschlagene Einführschräge wird das Einführen des Gelenkabschnitts mit dem Gelenkteil in den Gabelabschnitt des benachbarten Kettenglieds während der Montage der Förderkette vereinfacht.

Die Erfindung wird im Folgenden anhand der beigefügten Zeichnungen näher erläutert. Es stellt dar:
- Fig. 1: eine Explosionsansicht eines erfindungsgemäßen Kettenglieds;
- Fig. 2: eine perspektivische Ansicht einer Förderkette bestehend aus Kettengliedern nach Fig. 1 von oben;
- Fig. 3: eine Untersicht einer Förderkette bestehend aus Kettengliedern nach Fig. 1;
- Fig. 4: eine Seitenansicht eines Antriebszahnrades, welches in Eingriff mit einer Förderkette bestehend aus Kettengliedern nach Fig. 1 steht.

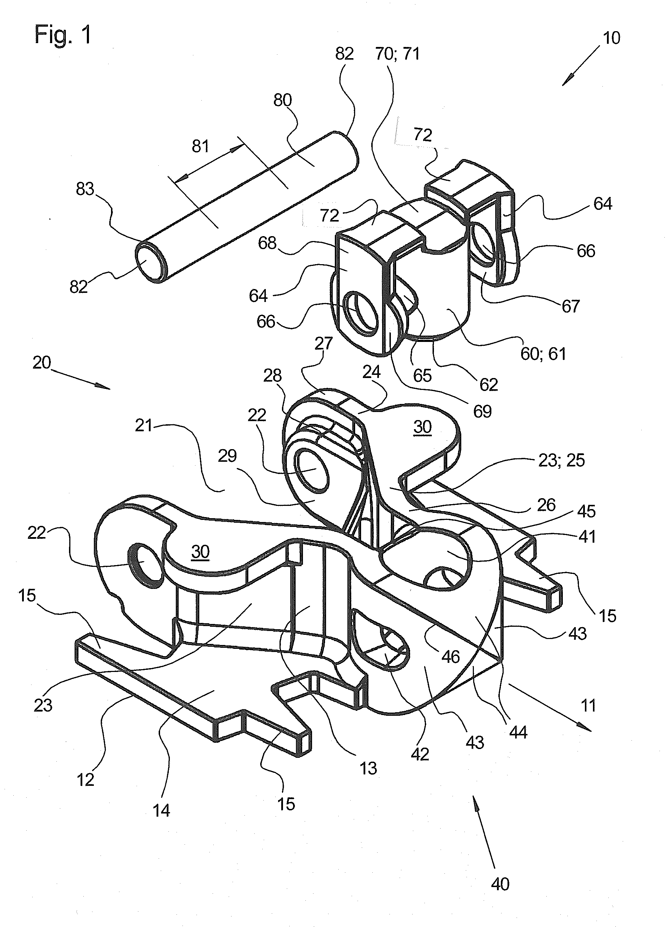

Fig. 1 zeigt eine Explosionsansicht eines erfindungsgemäßen Kettenglieds 10. Das Kettenglied 10 umfasst einen einstückigen Grundkörper 13 aus Polyoxymethylen, ein einstückiges Gelenkteil 60 aus Polyamid und einen Bolzen 80 aus Stahl. Der Grundkörper 13 und das Gelenkteil 60 sind jeweils im Kunststoffspritzgussverfahren hergestellt.

Der insgesamt spiegelsymmetrische Grundkörper 13 umfasst einen Gelenk- und einen Gabelabschnitt 40; 20 und ein Mitnahmemittel 14. Das Mitnahmemittel ist in Form einer ebenen Platte ausgeführt, welche eine Förderebene 12 definiert. Die ebene Platte 14 ist mit in Förderrichtung 11 weisenden Zähnen 15 versehen, so dass die Zähne 15 benachbarter Grundkörper 13 einer Förderkette ineinander greifen, damit das (nicht dargestellte) Fördergut auch bei Kurvenfahrt möglichst vollflächig abgestützt ist. Die ebene Platte 14 ist so nahe an dem Gelenk- und dem Gabelabschnitt 40; 20 angeordnet, dass sie die Zugkräfte in der Förderkette mit überträgt.

Der Gabelabschnitt 20 umfasst zwei Gabelschenkel 23, welche zusammen eine Gelenkausnehmung 21 begrenzen, die zur Aufnahme des Gelenkabschnitts 40 eines benachbarten, identischen Kettenglieds vorgesehen ist. Die Gabelschenkel 23 stehen senkrecht von der ebenen Platte 14 ab und sind an ihrer in Förderrichtung 11 weisenden Stirnfläche halbkreisförmig verrundet 27. Im Mittelpunkt der Verrundung 27 ist eine Bolzenausnehmung 22 in Form eines kreiszylindrischen Durchbruchs angeordnet, in welcher der Bolzen 80 mit geringem Spiel aufgenommen ist. Der Bolzen 80 ist hierbei über seine gesamte Länge kreiszylindrisch ausgeführt, wobei er an beiden Enden mit einer ebenen Stirnfläche 82 versehen ist, die am Rand eine Fase 83 aufweist. Die Gabelschenkel 23 haben jeweils einen im Wesentlichen Z-förmigen Verlauf mit einem ersten und einem dritten Abschnitt 24; 26, die parallel zur Förderrichtung 11 der Förderkette verlaufen, wobei der dazwischen liegende zweite Abschnitt 25 geneigt zur Förderrichtung 11 verläuft. Die Gabelschenkel 23 weisen jeweils eine im Wesentlichen konstante Wanddicke auf, damit sie sich beim Spritzgießen nicht verziehen. Weiterhin ist die Höhe der Gabelschenkel 23 konstant, damit die untere Begrenzungsfläche des Grundkörpers 13 im Wesentlichen eben ist. Um die Bolzenausnehmung 22 herum ist der Gabelschenkel 23 mit einer Verstärkung 28 versehen, damit die durch den Kettenzug verursachten Druckspannungen in der Bolzenausnehmung 22 nicht unzulässig groß werden. An beiden zweiten Abschnitten 25 der Gabelschenkel 23 ist auf der von der ebenen Platte 14 abgewandten Seite eine Antriebszunge 30 angeordnet. Die Antriebszunge 30 erstreckt sich parallel zur ebenen Platte 14 und quer zur Förderrichtung 11, wobei sie an ihrer Stirnseite halbkreisförmig verrundet ist. Die Antriebszunge 30 ist zum Eingriff mit einem (nicht dargestellten) Antriebszahnrad bestimmt, welches die Förderkette in einer Ebene parallel zur Förderebene 12 umlenkt.

Die Gabelschenkel 23 gehen einstückig in den Gelenkabschnitt 40 über. Der Gelenkabschnitt 40 weist eine zweite Fläche 43 auf, die kreiszylindrisch ausgebildet ist, wobei sie senkrecht zur Förderebene 12 ausgerichtet ist. Weiter ist eine fünfte Fläche 44 vorgesehen, die kreiszylindrisch ausgebildet ist und die parallel zur Förderebene 12 verläuft. Die Kreisradien der zweiten und der fünften Fläche 43; 44 sind gleich ausgeführt, so dass deren Schnittkanten 46 sich im Winkel von 90° schneiden. Konzentrisch zur vierten Fläche ist eine Lagerausnehmung 41 mit einer kreiszylindrischen Innenumfangsfläche vorgesehen, welche in Form eines Grundlochs ausgeführt ist, so dass sie die ebene Platte 14 nicht schneidet. Quer zur Lagerausnehmung 41 ist ein Bolzendurchbruch 42 angeordnet, der den gesamten Gelenkabschnitt 40 durchsetzt, wobei er den Lagerdurchbruch 41 schneidet. Der Bolzendurchbruch 42 wird von dem Bolzen 80 durchsetzt, wobei der Bolzen 80 bezüglich der Mittelachse der Lagerausnehmung 41 drehbeweglich ist. Der Bolzendurchbruch 42 ist daher in der Art eines Langlochs ausgeführt, das sich parallel zur Förderebene 12 erstreckt, um die genannte Drehbeweglichkeit zu ermöglichen.

Das Gelenkteil 60 ist spiegelsymmetrisch ausgebildet und umfasst einen Lagerabschnitt 61, zwei Gleitabschnitte 64 und zwei Verbindungsabschnitte 72, welche den zugeordneten Gleitabschnitt 64 mit dem Lagerabschnitt 61 einstückig verbinden. Der Lagerabschnitt 61 ist in Form eines Kreiszylinders ausgebildet, der an seinem freien Ende mit einer ebenen Stirnfläche 62 und einer Fase 63 versehen ist, wobei die Lagerausnehmung 41 an diese Form im Wesentlichen spielfrei angepasst ist. Am gegenüberliegenden Ende sind die Verbindungsabschnitte 72 einstückig mit dem Lagerabschnitt 61 verbunden. Die Verbindungsabschnitte 72 sind im Wesentlichen in Form einer ebenen, rechteckigen Platte ausgebildet, wobei sie senkrecht von dem Lagerabschnitt 61 abstehen. Die Verbindungsabschnitte 72 berühren den Gelenkabschnitt 40 gleitend oder sind mit geringem Abstand zu diesem angeordnet. Zwischen den Verbindungsabschnitten 72 ist eine Ausnehmung 70 vorgesehen, welche eine konvex gebogene Grundfläche 71 aufweist, die sich quer zum Bolzen 80 über die gesamte Breite des Lagerabschnitts 61 erstreckt. Der Krümmungsradius der genannten Grundfläche 71 ist gleich dem Krümmungsradius der fünften Fläche 44, wobei die genannten Flächen 71; 44 knick- und absatzfrei ineinander übergehen, solange die Förderkette gerade ausgerichtet ist.

Die Gleitabschnitte 64 sind einstückig mit dem zugeordneten Verbindungsabschnitt 72 ausgebildet und stehen senkrecht von diesem ab. Die dem Lagerabschnitt 61 zugewandte erste Fläche 67 am Gleitabschnitt ist kreiszylindrisch und konzentrisch zum Lagerabschnitt 61 ausgebildet und liegt im Wesentlichen spaltfrei und gleitbeweglich an der zweiten Fläche 43 am Gelenkabschnitt 40 an, so dass das Gelenkteil 60 bezüglich der Mittelachse des Lagerabschnitts 61 drehbar bezüglich dem Grundkörper 13 ist. An der vom Lagerabschnitt 61 abgewandten Seite ist der Gleitabschnitt 64 mit einer ebenen dritten Fläche 68 versehen, welche sich quer zur Förderebene 12 erstreckt. Die dritte Fläche 68 liegt an einer ebenen vierten Fläche 29 an den Gabelschenkeln 23 des Gabelabschnitts 20 an, so dass sich das Gelenkteil 60 bezüglich des zugeordneten Gabelabschnitts 20 nur um die Mittelachse des Bolzens 80 drehen kann. In Förderrichtung 11 zu beiden Seiten der dritten Fläche 68 ist eine Einführschräge 69 an dem Gleitabschnitt 64 vorgesehen.

Der Lagerabschnitt 61 ist mit einem ersten kreiszylindrischen Durchbruch 65 versehen, der sich quer zu dessen kreiszylindrischen Außenumfangsfläche erstreckt, wobei sich die beiden Zylinderachsen schneiden. In den Gleitabschnitten 64 ist je ein zweiter kreiszylindrischer Durchbruch 66 fluchtend zu dem ersten Durchbruch 65 angeordnet. Der Bolzen 80 ist mit Presssitz im ersten Durchbruch 65 und mit geringem Spiel im zweiten Durchbruch 66 aufgenommen, so dass der Gleitabschnitt 64 den Bolzen 80 umgibt.

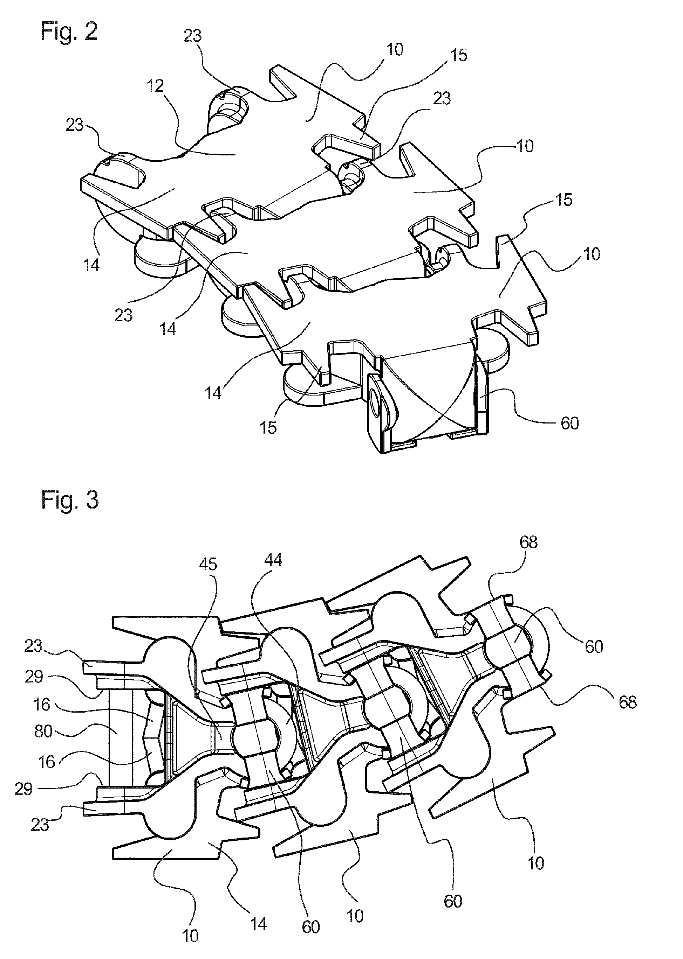

Fig. 2 zeigt eine perspektivische Ansicht einer Förderkette bestehend aus Kettengliedern 10 nach Fig. 1 von oben. Die Förderkette ist in einer Stellung gezeigt, wie sie bei Kurvenfahrt vorliegt. Die Mitnahmemittel 14 in Form der ebenen Platten bilden eine Förderebene 12, soweit die gesamte Förderkette in einer Ebene bewegt wird. Die Zähne 15 der ebenen Platten 14 greifen ineinander, so dass insbesondere an der Kurvenaußenseite eine im Wesentlichen vollflächige Abstützung des (nicht dargestellten) Fördergutes gegeben ist. Hierbei wird der Kurvenradius durch die aneinanderstoßenden ebenen Platten 14 bzw. Zähne 15 an der Kurveninnenseite nach unten begrenzt, wobei die Förderstrecke üblicherweise so ausgelegt ist, dass eine derartige Berührung nicht stattfindet.

Die Gabelschenkel 23 des Gabelabschnitts sind so angeordnet, dass diese ebenenfalls die Funktion eines Zahnes der ebenen Platte 14 übernehmen können, wobei zwischen den Gabelschenkeln 23 auf Zähne verzichtet wurde, wie sie beispielsweise bei dem Kettenglied gemäß der EP 1 311 446 B1 vorhanden sind. Stattdessen wurde an dieser Stelle der Abstand der ebenen Platten der benachbarten Kettenglieder 10 so klein wie möglich ausgeführt.

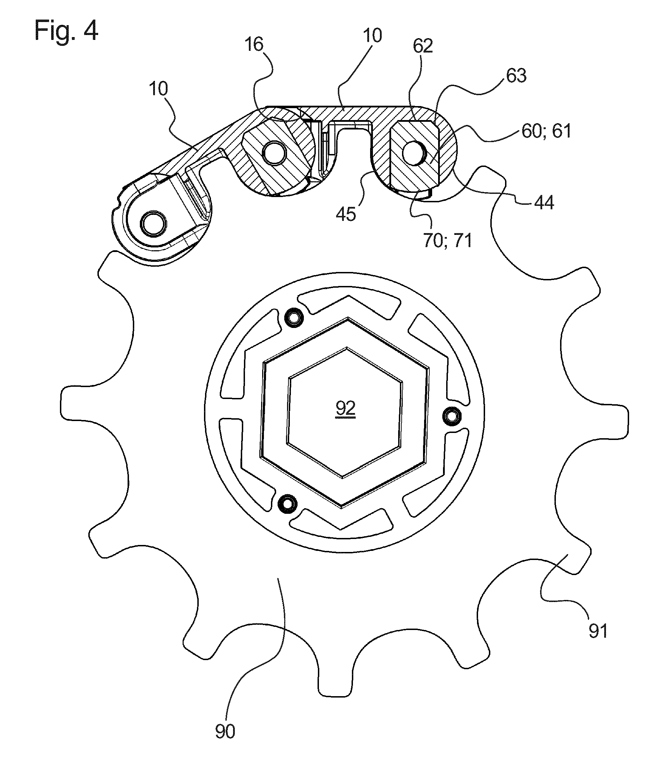

Fig. 3 zeigt eine Untersicht einer Förderkette bestehend aus Kettengliedern 10 nach Fig. 1. Zu erkennen ist, wie der Bolzen 80 zwischen den Gabelschenkeln 23 des Gabelabschnitts aufgenommen ist. Weiter ist auf die sechste Fläche 45 hinzuweisen, die zwischen den Gabelschenkeln 23 angeordnet ist, wobei die sechste Fläche 45 mit der fünften Fläche 44 auf einem gemeinsamen Kreiszylinder liegt, der parallel zur Förderebene angeordnet ist. Weiter ist auf die Anfasungen 16 an der Unterseite der ebenen Platte 14 hinzuweisen. Die Querschnittsform der Anfasung 16 ist, wie in Fig. 4 zu erkennen ist, mit geringem Abstand äquidistant zur fünften Fläche 44 am Gelenkabschnitt des benachbarten Kettenglieds 10 ausgeführt, so dass der Abstand der ebenen Platten 14 in diesem Bereich klein ist. Weiter ist in Fig. 3 die Ausrichtung der Gelenkteile 60 bezüglich der Gabelschenkel 23 bei Kurvenfahrt zu erkennen. Insbesondere ist auf die berührende Anlage der dritten 68 und der vierten Fläche 29 hinzuweisen.

Fig. 4 zeigt eine Seitenansicht eines Antriebszahnrades 90, welches in Eingriff mit einer Förderkette bestehend aus Kettengliedern 10 nach Fig. 1 steht. Die Förderkette ist dabei im Längsschnitt dargestellt. Mit dem Antriebszahnrad 90 wird die Förderkette in Bewegung versetzt. Das Antriebszahnrad 90 ist beispielsweise mit einem Innensechskant 92 versehen, über das es in formschlüssige Drehantriebsverbindung mit einem (nicht dargestellten) Elektromotor gebracht werden kann. Die Zähne 91 des Antriebszahnrads 90 greifen dabei mit geringem Spiel zwischen den dritten Abschnitten (Nr. 26; Fig. 1) der Gabelschenkel des Kettenglieds 10 an, wobei sie an der sechsten Fläche 45 anliegen. Soweit die Förderkette in entgegen gesetzter Richtung angetrieben werden soll, greifen die symmetrischen Zähne 91 des Antriebsrades 90 an der fünften Fläche 44 des Gelenkabschnitts an. Die bereits angesprochene Ausnehmung 70 zwischen den Verbindungsabschnitten des Gelenkteils 60 ist erforderlich, damit das Gelenkteil 60 die Umkehrung der Bewegungsrichtung der Förderkette nicht behindert.

### Bezugszeichenliste

- 10: Kettenglied
- 11: Förderrichtung
- 12: Förderebene
- 13: Grundkörper
- 14: Mitnahmemittel bzw. ebene Platte
- 15: Zahn der ebenen Platte
- 16: Anfasung

- 20: Gabelabschnitt
- 21: Gelenkausnehmung
- 22: Bolzenausnehmung
- 23: Gabelschenkel
- 24: erster Abschnitt des Gabelschenkels
- 25: zweiter Abschnitt des Gabelschenkels
- 26: dritter Abschnitt des Gabelschenkels
- 27: Verrundung des Gabelschenkels
- 28: Verstärkung
- 29: vierte Fläche
- 30: Antriebszunge

- 40: Gelenkabschnitt
- 41: Lagerausnehmung
- 42: Bolzendurchbruch
- 43: zweite Fläche
- 44: fünfte Fläche
- 45: sechste Fläche
- 46: Schnittkante

- 60: Gelenkteil
- 61: Lagerabschnitt
- 62: Stirnfläche
- 63: Fase
- 64: Gleitabschnitt
- 65: erster Durchbruch
- 66: zweiter Durchbruch
- 67: erste Fläche
- 68: dritte Fläche
- 69: Einführschräge
- 70: Ausnehmung des Gelenkteils
- 71: Grundfläche
- 72: Verbindungsabschnitt

- 80: Bolzen
- 81: mittlerer Abschnitt des Bolzens
- 82: Stirnfläche des Bolzens
- 83: Fase des Bolzens

- 90: Antriebszahnrad
- 91: Zahn des Antriebszahnrads
- 92: Innensechskant

## Patentansprüche

1. Kettenglied (10) für eine kurvengängige Förderkette mit einem Grundkörper (13) und einem Bolzen (80), wobei der Grundkörper (13) einen Gelenk- und einen Gabelabschnitt (40; 20) und ein Mitnahmemittel (14) zur Mitnahme von Fördergut aufweist, wobei der Bolzen (80) langgestreckt und wenigstens in einem mittleren Abschnitt (81) kreiszylindrisch ausgebildet ist, wobei in dem Gelenkabschnitt (40) ein Bolzendurchbruch (42) vorgesehen ist, der von dem Bolzen (80) bezüglich wenigstens zweier Achsen drehbeweglich durchsetzt werden kann, wobei der Gabelabschnitt (20) eine Gelenkausnehmung (21) zur Aufnahme des Gelenkabschnitts (40) eines benachbarten, identischen Kettenglieds aufweist, wobei der Gabelabschnitt (20) zwei gegenüberliegende Bolzenausnehmungen (22) aufweist, welche die gegenüberliegenden Enden des Bolzens (80) des benachbarten Kettenglieds aufnehmen können, wobei an dem Grundkörper (13) wenigstens ein Gleitabschnitt (64) vorgesehen ist, der aus einem anderen Material als der Grundkörper (13) besteht,
wobei zwei Gleitabschnitte (64) gegenüberliegend an dem Gelenkabschnitt (40) angeordnet sind, wobei sie den Bolzen (80) umgeben, wobei die Grundkörper (13) zweier benachbarter, identischer Kettenglieder (10) durch die Gleitabschnitte (64) so auf Abstand gehalten werden, dass sich deren Gelenkund deren Gabelabschnitt (40; 20) nur an den Gleitabschnitten (64) berühren,
**dadurch gekennzeichnet, dass** der Gelenkabschnitt (40) eine Lagerausnehmung (41) mit einer kreiszylindrischen Innenumfangsfläche aufweist, welche den Bolzendurchbruch (42) kreuzt, wobei ein Gelenkteil (60) mit einem Lagerabschnitt (61) vorgesehen ist, wobei der Lagerabschnitt (61) eine kreiszylindrische Außenumfangsfläche aufweist und drehbar in der Lagerausnehmung (41) aufgenommen ist, wobei der Lagerabschnitt einen kreiszylindrischen ersten Durchbruch (65) aufweist, der quer zu dessen kreiszylindrischer Außenumfangsfläche verläuft, wobei die Gleitabschnitte (64) einstückig an dem Gelenkteil (60) ausgebildet sind.

2. Kettenglied nach Anspruch 1,
**dadurch gekennzeichnet, dass** das Material des Grundkörpers (13) und des Gleitabschnitts (64) jeweils eines der Materialien Polyoxymethylen (POM), Polybutylenterephthalat (PBT), Polyamid (PA), Polypropylen (PP), Polyethylen (PE), Polybutylensuccinat (PBS), Polyvinylidenfluorid (PVDF), Polycarbonat (PC) oder Polyethylenterephthalat (PET) ist, wobei vorzugsweise der Grundkörper (13) aus Polyoxymethylen und die Gleitabschnitte (64) aus Polyamid bestehen.

3. Kettenglied nach einem der vorstehenden Ansprüche,
**dadurch gekennzeichnet, dass** die Gleitabschnitte (64) jeweils einen zweiten kreiszylindrischen Durchbruch (66) aufweisen, der fluchtend zum ersten Durchbruch (65) angeordnet ist.

4. Kettenglied nach einem der vorstehenden Ansprüche,
**dadurch gekennzeichnet, dass** jedem Gleitabschnitt (64) ein Verbindungsabschnitt (72) zugeordnet ist, welcher den Gleitabschnitt (64) mit dem Lagerabschnitt (61) einstückig verbindet, wobei der Verbindungsabschnitt (72) gleitend am Gelenkabschnitt (40) des Grundkörpers (13) anliegt oder mit geringem Abstand zu diesem angeordnet ist.

5. Kettenglied nach Anspruch 4,
**dadurch gekennzeichnet, dass** im Bereich einer Stirnfläche des Lagerabschnitts (61) zwischen den Verbindungsabschnitten (72) eine Ausnehmung (70) mit einer konvex gebogenen Grundfläche (71) vorgesehen ist, welche sich quer zum Bolzen (80) über die gesamte Breite des Lagerabschnitts (61) erstreckt.

6. Kettenglied nach einem der vorstehenden Ansprüche,
**dadurch gekennzeichnet, dass** der Gleitabschnitt (64) auf der dem Lagerabschnitt (61) zugewandten Seite eine zum Lagerabschnitt (61) koaxiale, kreiszylindrische erste Fläche (67) aufweist, die an einer angepassten zweiten Fläche (43) am Gelenkabschnitt (40) anliegt.

7. Kettenglied nach einem der vorstehenden Ansprüche,
**dadurch gekennzeichnet, dass** der Gleitabschnitt (64) auf der vom Lagerabschnitt (61) abgewandten Seite eine ebene dritte Fläche (68) aufweist, wobei die gegenüberliegende vierte Fläche (29) am Gabelabschnitt (20) ebenfalls eben ausgebildet ist.

8. Kettenglied nach Anspruch 7,
**dadurch gekennzeichnet, dass** am Gleitabschnitt (64) angrenzend an die dritte Fläche (68) eine Einführschräge (69) angeordnet ist.

## Claims

1. Chain link (10) for a curved conveyor chain, the chain link having a main body (13) and a pin (80), wherein the main body (13) has an articulation section and a fork section (40; 20) and a driver means (14) for taking along material to be conveyed, wherein the pin (80) is of elongate and circular cylindrical design, at least in a central section (81), wherein in the articulation section (40) a pin opening (42) is provided through which the pin (80) can pass in a manner which allows it to rotate relative to at least two axes, wherein the fork section (20) has an articulation recess (21) for accommodating the articulation section (40) of an adjacent identical chain link, wherein the fork section (20) has two opposite pin apertures (22), which can accommodate the opposite ends of the pin (80) of the adjacent chain link, wherein at least one slide section (64), which is composed of a different material from the main body (13), is provided on the main body (13),
wherein two slide sections (64) are provided opposite one another on the articulation section (40), wherein they surround the pin (80), wherein the main bodies (13) of two adjacent identical chain links (10) are held at a distance by the slide sections (64) in such a way that the articulation and fork sections (40; 20) thereof touch only at the slide sections (64),
**characterized in that** the articulation section (40) has a bearing aperture (41) having a circular cylindrical inner circumferential surface, which intersects the pin opening (42), wherein an articulation part (60) is provided with a bearing section (61), wherein the bearing section (61) has a circular cylindrical outer circumferential surface and is accommodated rotatably in the bearing aperture (41), wherein the bearing section has a circular cylindrical first opening (65), which extends transversely to the circular cylindrical outer circumferential surface thereof, wherein the slide sections (64) are formed integrally on the articulation part (60).

2. Chain link according to Claim 1,
**characterized in that** the material of the main body (13) and of the slide section (64) is in each case one of the materials polyoxymethylene (POM), polybutylene terephthalate (PBT), polyamide (PA), polypropylene (PP), polyethylene (PE), polybutylene succinate (PBS), polyvinylidene fluoride (PVDF), polycarbonate (PC) or polyethylene terephthalate (PET), wherein the main body (13) is preferably composed of polyoxymethylene and the slide sections (64) are preferably composed of polyamide.

3. Chain link according to either of the preceding claims,
**characterized in that** the slide sections (64) each have a second circular cylindrical opening (66), which is arranged in alignment with the first opening (65).

4. Chain link according to one of the preceding claims,
**characterized in that** each slide section (64) is assigned a connecting section (72), which connects the slide section (64) integrally to the bearing section (61), wherein the connecting section (72) rests in a sliding manner on the articulation section (40) of the main body (13) or is arranged at a slight spacing with respect to said body.

5. Chain link according to Claim 4,
**characterized in that** a recess (70) having a convexly curved bottom surface (71) is provided between the connecting sections (72) in the region of an end face of the bearing section (61), said recess extending transversely to the pin (80) over the entire width of the bearing section (61).

6. Chain link according to one of the preceding claims,
**characterized in that**, on the side facing the bearing section (61), the slide section (64) has a circular cylindrical first surface (67) coaxial with the bearing section (61), which surface rests on a matching second surface (43) on the articulation section (40).

7. Chain link according to one of the preceding claims,
**characterized in that** the slide section (64) has a flat third surface (68) on the side facing away from the bearing section (61), wherein the opposite fourth surface (29) on the fork section (20) is likewise of flat design.

8. Chain link according to Claim 7,
**characterized in that** a guide bevel (69) is arranged on the slide section (64), adjoining the third surface (68).

## Revendications

1. Maillon de chaîne (10) pour une chaîne de transport en courbe comprenant un corps de base (13) et un boulon (80), le corps de base (13) présentant une portion d'articulation et une portion de fourche (40 ; 20) et un moyen d'entraînement (14) pour entraîner des produits transportés, le boulon (80) étant réalisé sous forme allongée et cylindrique circulaire au moins dans une portion centrale (81), un trou de boulon (42) étant prévu dans la portion d'articulation (40), lequel peut être traversé par le boulon (80) de manière déplaçable en rotation par rapport à au moins deux axes, la portion de fourche (20) présentant un évidement d'articulation (21) pour recevoir la portion d'articulation (40) d'un maillon de chaîne identique adjacent, la portion de fourche (20) présentant deux évidements de boulon opposés (22) qui peuvent recevoir les extrémités opposées du boulon (80) du maillon de chaîne adjacent, au moins une portion de coulissement (64) étant prévue sur le corps de base (13), laquelle se compose d'un autre matériau que celui du corps de base (13),
deux portions de coulissement (64) étant disposées à l'opposé l'une de l'autre sur la portion d'articulation (40), celles-ci entourant le boulon (80), les corps de base (13) de deux maillons de chaîne identiques adjacents (10) étant maintenus à distance par les portions de coulissement (64) de telle sorte que leur portion d'articulation et leur portion de fourche (40 ; 20) ne viennent en contact qu'au niveau des portions de coulissement (64),
**caractérisé en ce que** la portion d'articulation (40) présente un logement de palier (41) avec une surface périphérique interne cylindrique circulaire qui croise le trou de boulon (42), une partie d'articulation (60) étant pourvue d'une portion de palier (61), la portion de palier (61) présentant une surface périphérique extérieure cylindrique circulaire et étant reçue de manière rotative dans le logement de palier (41), la portion de palier présentant un premier trou cylindrique circulaire (65) qui s'étend transversalement à sa surface périphérique extérieure cylindrique circulaire, les portions de coulissement (64) étant réalisées d'une seule pièce sur la partie d'articulation (60).

2. Maillon de chaîne selon la revendication 1, **caractérisé en ce que** le matériau du corps de base (13) et de la portion de coulissement (64) est à chaque fois l'un des matériaux suivants : polyoxyméthylène (POM), polybutylènetéréphtalate (PBT), polyamide (PA), polypropylène (PP), polyéthylène (PE), poly(butylène succinate) (PBS), fluorure de polyvinylidène (PVDF), polycarbonate (PC) ou polyéthylène téréphtalate (PET), le corps de base (13) se composant de préférence de polyoxyméthylène et les portions de coulissement (64) de polyamide.

3. Maillon de chaîne selon l'une quelconque des revendications précédentes,
**caractérisé en ce que** les portions de coulissement (64) présentent chacune un deuxième trou cylindrique circulaire (66) qui est disposé en affleurement par rapport au premier trou (65).

4. Maillon de chaîne selon l'une quelconque des revendications précédentes,
**caractérisé en ce qu'**une portion de connexion (72) est associée à chaque portion de coulissement (64), laquelle relie d'une seule pièce la portion de coulissement (64) à la portion de palier (61), la portion de connexion (72) s'appliquant par glissement contre la portion d'articulation (40) du corps de base (13) ou étant disposée à faible distance de celui-ci.

5. Maillon de chaîne selon la revendication 4,
**caractérisé en ce que** dans la région d'une surface frontale de la portion de palier (61) entre les portions de connexion (72) est prévu un logement (70) ayant une surface de base de courbure convexe (71) qui s'étend transversalement par rapport au boulon (80) sur toute la largeur de la portion de palier (61).

6. Maillon de chaîne selon l'une quelconque des revendications précédentes,
**caractérisé en ce que** la portion de coulissement (64) présente sur le côté tourné vers la portion de palier (61) une première surface cylindrique circulaire (67) coaxiale à la portion de palier (61), qui s'applique contre une deuxième surface adaptée (43) au niveau de la portion d'articulation (40).

7. Maillon de chaîne selon l'une quelconque des revendications précédentes,
**caractérisé en ce que** la portion de coulissement (64) présente du côté opposé à la portion de palier (61) une troisième surface plane (68), la quatrième surface opposée (29) au niveau de la portion de fourche (20) étant également réalisée sous forme plane.

8. Maillon de chaîne selon la revendication 7,
**caractérisé en ce qu'**un biseau d'introduction (69) est disposé sur la portion de coulissement (64) en position adjacente à la troisième surface (68).
